# EUROPEAN PATENT SPECIFICATION

(11) **EP 3 004 869 B1**
(45) Date of publication and mention of the grant of the patent: **29.08.2018**
(21) Application number: 14727167.0
(22) Date of filing: 07.05.2014
(51) Int. Cl.: G01N 33/20, G01N 21/78, G01N 17/04, G01N 21/25

(54) **PRINTED CIRCUIT BOARD (PCB) AND PROCEDURE TO CALCULATE THE LEVEL OF CORROSIVE EXPOSURE OF A PRINTED CIRCUIT BOARD (PCB)**
LEITERPLATTE UND VERFAHREN ZUR KALKULATION DES KORROSIVEN EXPOSITIONSGRADES EINER ENTSPRECHENDEN LEITERPLATTE
CARTE DE CIRCUIT IMPRIMÉ ET PROCÉDÉ DE CALCUL DU TAUX D'EXPOSITION À UNE MATIÈRE CORROSIVE D'UNE CARTE DE CIRCUIT IMPRIMÉE

(30) Priority: 04.06.2013 US 201361830639 P
(43) Date of publication of application: 13.04.2016
(73) Proprietor: BIOTRONIK SE & Co. KG, 12359 Berlin (DE)
(72) Inventor: CHEN, Singjang, Beaverton, OR 97007 (US); SHARAN, Alok, Lake Oswego, OR 97035 (US); SPORON-FIEDLER, Frederik, Corvallis, OR 97333 (US); LECOMPTE, Marion Ronald, Portland, OR 97219 (US)
(74) Representative: Galander, Marcus
(86) International application number: PCT/EP2014/059305
(87) International publication number: WO 2014/195078

(56) References cited:
- JP-A- H0 798 309
- JP-B2- 3 116 692
- US-A1- 2004 252 307
- US-A1- 2004 252 307
- US-A1- 2009 311 140
- US-A1- 2012 137 959
- US-A1- 2012 183 452
- US-A1- 2013 016 465
- US-A1- 2013 052 848
- JON R. ASKIM ET AL: "Optical sensor arrays for chemical sensing: the optoelectronic nose", CHEMICAL SOCIETY REVIEWS, vol. 42, no. 22, 3 June 2013 (2013-06-03), page 8649, XP055128546, ISSN: 0306-0012, DOI: 10.1039/c3cs60179j
- Chun Wu ET AL: "Using Everyday Examples in Engineering (E3) Oxidation reaction: Why is the Statue of Liberty blue-green? How does rust work?", , 1 January 2011 (2011-01-01), XP055128547, Retrieved from the Internet: URL:http://www.wskc.org/documents/281621/2 82063/ENGAGE_E3S_Chemistry_Statue of Liberty.pdf [retrieved on 2014-07-11]
- Jon R. Askim ET AL: "Optical sensor arrays for chemical sensing: the optoelectronic nose", Chemical Society Reviews, vol. 42, no. 22, 1 January 2013 (2013-01-01), page 8649, XP055128546, ISSN: 0306-0012, DOI: 10.1039/c3cs60179j
- Chun Wu ET AL: "Using Everyday Examples in Engineering (E3) Oxidation reaction: Why is the Statue of Liberty blue-green? How does rust work?", , 1 January 2011 (2011-01-01), XP055128547, Retrieved from the Internet: URL:http://www.wskc.org/documents/281621/2 82063/ENGAGE_E3S_Chemistry_Statue of Liberty.pdf/e4f24c7e-3666-425e-9c41-7dbdd0 065eb4 [retrieved on 2014-07-11]

## Description

The disclosure refers to a sensor unit for an electronic module, a respective electronic module as well as a procedure to calculate the level of corrosive exposure of a respective electronic module.
Performance and reliability of electronic modules like printed circuit boards (PCB) of high reliability products can be impaired by corrosion including sulfur (S) and chlorine (Cl) contamination. It is, therefore, necessary to determine the corrosive exposure level of a product while it is being stored, shipped, manufactured or used.
Presently, it is known to use large sulfur analyzers that sense the level of sulfur in air or other gases, for example the total sulfur analyzer of the company EST analytical TS 3000 based on pulsed UV fluorescence.
Further, at present the company Techno-Sciences Inc. sells a still large sulfur sensor for hydrogen fuel cell operations which is based on localized surface plasmon resonance capable of detecting parts per billion trace levels of sulfur compounds. The sensor features a nanoparticle decorated thin film technology coupled with a VIS-NIR light source and UV-VIS linear detector. The sensor is based on hybrid plasmon damping that means the damping of the hybrid plasmon mode of nobel metal nanoparticles due to molecular absorption at the nanoparticle surface is observed. Therefore, nanostructured silver is used which detects trace levels of sulfur compounds. This follows from strong interactions of sulfur with silver that distorts the local electric potential at a nanoparticle surface leading to increase electron scattering, and hence increased hybrid plasmon damping.

Further, the company Plurafil offers a continuous corrosion transmitter that measures in real time the amount of corrosion forming on copper and silver surfaces and transmits this information to a control system. Therefore, the device provides two quartz crystal micro balance sensors, one plated with copper and the other one with silver, wherein each has a natural resonance frequency based on mass. The plating accumulates corrosion films when acid gases react with the base metal. This process results in an increase in sensor mass and a decrease in natural resonance frequency. By applying the proper conversion factors, the sensor correlates the determined mass to corrosion thickness expressed in Angstroms. US 2009/311140 A1 discloses a combined unit of a card-shaped humidity indicator and a desiccant pack used in the transport of e.g. electronic components such as circuit boards susceptible to being damaged due to exposure to moisture. The humidity indicator is enclosed together with e.g. circuit boards and the desiccant pack within a transparent gas-tight packaging bag. Whether the humidity within the bag exceeds a specified limit can be determined visually from the color of the face of the humidity indicator.

Considering
the above, known possibilities to detect corrosives the problem arises to provide a small and lightweight sensor for corrosives like S and Cl which is feasible to observe the corrosive contamination during the whole lifetime of the electronic module.

The above problem is solved by a printed circuit board (PCB) comprising a sensor unit with the features of claim 1. An inventive procedure to calculate the level of corrosive exposure of a printed circuit board (PCB) comprising a sensor unit is described in claim 14 solving above problem, too.

The inventive printed circuit board (PCB) comprising a sensor unit in particular comprises at least one exposed component containing a chemical element and/or a chemical compound at its surface which is adapted to undergo a color change observed in visible light due to the presence of a corrosive, preferably containing elementary copper. The sensor unit further comprises a light receiving element, for example a spectrophotometer or a camera, operable to receive the visible light reflected by the exposed component.

In another embodiment the sensor unit comprises processing means operable to determine the color of the visible light reflected by the exposed component, preferably the RGB (Red-Green-Blue) color intensity of the reflected visible light. Therein the RGB color intensity is a well known parameter which is based on the RGB color model and one possibility to describe the color of the reflected visible light. The color spectrum of the light can also be established through use of prisms or diffraction gratings or the like.

The main advantage of above described printed circuit board (PCB) comprising a sensor unit, in particular according to the above described preferred embodiments, consists therein that this printed circuit board (PCB) comprising a sensor unit can be deployed with the product, i.e. the electronic module or PCB, in a reasonable fashion due to the small instrument size. That means that the printed circuit board (PCB) comprising a sensor unit is so small and lightweight that it can be accommodated at the surface of the substrate of the electronic module (PCB) like any other electronic component.
The sensor unit is based on the idea that some chemical elements and/or chemical compounds undergo a color change if they are exposed to a corrosive gas or substance and if they are illuminated by visible, preferably by white light. That means the corrosive which reacts with the chemical element and/or chemical compound or is absorbed by either one changes the color of the reflected light.
Regarding the corrosives sulfur (S) and chlorine (Cl), elementary copper (Cu) changes its color from bright brown (Cu color) to blue as it is exposed to S and to blue-green as it is exposed to Cl and H₂O. In case Cu is exposed to air containing S at the surface of the exposed Cu, the Cu reacts with S forming copper monosulfide (copper (I) sulfide, CuS) which occurs in nature as a dark indigo blue mineral covellite. The corrosion product of Cl with Cu is Cu(II)chloride (CuCl₂), in particular the dihydrate of copper chloride (CuCl₂ * 2H₂O). The color of CuCl₂ * 2H₂O is light blue-green. In order to undergo a color change due to a corrosive reaction at the surface of the exposed component, the exposed component provides a free and exposed surface containing the chemical element or the chemical compound for the reaction with the corrosive or for the adsorption of the corrosive. It is preferred that the exposed surface has a total surface area that can be imaged with a small (<1 mm diameter) lens. In case the exposed component consists preferably of at least two elements or a plurality of elements, each has a surface area which is sized to allow sufficient sensitivity. With present technology the entire assembly is feasible in a size of <1mm², wherein the elements preferably comprising different surface forms like circles or bars. The above mentioned minimum surface area of the exposed component or its elements allows a reliable detection of color change.

Either by a spectrophotometer or by taking a picture of the exposed component with a camera and then by using an appropriate imaging software the color of the reflected light by the exposed component may be determined and from that the exposure level of the corrosive, for example of S or Cl, may be calculated based on a respective color calibration done beforehand. Therein the exposure level of the corrosive refers to a certain predefined concentration level of S, Cl or S+Cl in the ambient air.

In the following, the invention is described using S and Cl as examples of corrosive species but this technique may be applied to other corrosives and other materials of the exposed component beside elementary Cu as well.

In another embodiment the sensor unit further comprises a light source directed to the exposed component, preferably providing white light, preferably in the 350-800 nm wavelength range.

As explained above, the sensor unit comprises processing means able to calculate the level of corrosive exposure, for example S / Cl exposure using the determined color of reflected visible light, preferably the RGB color intensity of the reflected visible light. Before the level of corrosive exposure can be determined, one has to correlate the present corrosive amount (such as At% Cl or S) from SEM/EDXS or other analytical methods with the relative intensity of red, green and blue colors in the reflected visible light from the exposed component.

In particular in order to determine the color of the reflected visible light the sensor unit may comprise at least one optical element, for example a color filter. Thereby, only one color can be determined at one time. In a preferred embodiment a plurality of color filters, for example three color filters for the colors red, green and blue are accommodated side by side so that at the same time the red, green and blue component of the reflected light is received at different areas of the light receiving element, for example of a CCD camera. It is obvious to someone skilled in the art, that any combination of filters spanning the color spectrum could be used to determine the relative color intensities.

For the installations of high reliability electronics such as telecommunications or military equipment it is of advantage if the sensor unit is operable to receive the reflected light and/or to determine the color of the reflected visible light and/or to calculate the level of corrosive exposure continuously or intermittently.

For remote access to the data measured, determined or calculated by the sensor unit it is advantageous if the sensor unit further comprises a representation of an individual number of the electronic module, wherein the light receiving element is operable to receive reflected visible light form the representation of the individual number. This representation may be realized for example as a 1D or 2D barcode. Thereby the corrosive contamination may be correlated with the specific electronic module and its specific manufacturing process, transportation way or other characteristics of its lifetime. In case the representation is realized as a 1D or 2D barcode the light receiving element and the processing means preferably work similar to a barcode scanner in order to determine the individual number of the electronic module.

In another embodiment the sensor unit further comprises a transmitter operable to transmit data from the sensor unit to a remote station, wherein the transmitted data contains data concerning the measured reflected visible light spectrum from the exposed component and/or from the representation of the individual number and/or data concerning the determined color of the reflected visible light and/or data concerning the calculated level of corrosive exposure. By this it is possible to receive data from the electronic module during the whole lifetime of the electronic module without opening the housing of the sensor unit or the electronic module.

In another embodiment the sensor unit further comprises a temperature sensor. The reaction of the corrosive with the surface of the exposed component depends on the temperature and time duration of the exposure. By considering the ambient temperature of the electronic module the accuracy of the determined level of corrosive exposure can be enhanced.
In a preferred embodiment the exposed component is surrounded by an area containing no solder mask because this enhances the S sensitivity. The exposed component is an integral part of the sensor unit. The sensor assembly is subsequently attached to the electronic module using standard attachment methods (e.g. surface mount soldering)
In another embodiment the sensor unit comprises a housing with an opening, wherein the opening is preferably accommodated close to the exposed component. On the one hand the housing protects the interior of the sensor unit and on the other hand the ambient air containing the corrosives reaches the exposed component via the opening.

The above problem is further solved by a printed circuit board (PCB) comprising a sensor unit. The advantage of the inventive electronic module is that the small and lightweight sensor unit is firmly connected with/attached to the electronic module and forms a part of the component set of the electronic module comparable to other electronic components. The outer dimensions of such a sensor unit are for example but not limited to3x3x1 mm (9 mm³).

The inventive procedure to calculate the level of corrosive exposure of a printed circuit board (PCB) with the above described sensor unit contains the following steps. At first the reflected visible light of the exposed component is received by a light receiving element, for example a camera (e.g. a CCD camera) or a spectrophotometer. Then, the color of the received reflected visible light, preferably the RGB color intensity of the reflected visible light is determined, preferably by processing means. Afterwards, by the processing means a level of corrosive exposure is calculated from the determined color of the reflected visible light.
In one preferred embodiment the level of corrosive exposure is calculated from the determined color of the reflected visible light, preferably from the determined RGB color intensity of the reflected visible light, is based on a mathematical model, for example using a quadratic equation.

As explained above the calculation of the level of corrosive exposure may be further based on the determined ambient temperature in a preferred embodiment.
A full and enabling disclosure of the present invention, including the best mode thereof, directed to one of ordinary skill in the art is set forth in the following specification of different embodiments. Thereby, further features and advantages are presented that are part of the present invention independently of the dependent claims.
The specification refers to the accompanying figures showing schematically
- Fig. 1: an inventive printed circuit board (PCB) comprising a sensor unit with an exposure component in a top view,
- Fig. 2: an example of an exposure component with a representation of an individual number in a top view,
- Fig. 3: a first embodiment of a sensor unit accommodated at an inventive printed circuit board (PCB) comprising a sensor unit in a side view,
- Fig. 4: another embodiment of a sensor unit accommodated at an inventive printed circuit board (PCB) comprising a sensor unit in a side view,
- Fig. 5: the relationship of red color percentage intensity and S concentration in ambient air (in at %) as determined by experiment (see square dots) and fitted with a quadratic equation,
- Fig. 6: the relationship of blue color percentage intensity and S concentration in ambient air (in at %) as determined by experiment (see square dots) and fitted with a quadratic equation (see line),
- Fig. 7: the relationship of red color percentage intensity and S + Cl concentration in ambient air (in at %) as determined by experiment (see square dots) and fitted with a quadratic equation (see line), and
- Fig. 8: the relationship of blue color percentage intensity and S + Cl concentration in ambient air (in at %) as determined by experiment (see square dots) and fitted with a quadratic equation (see line).
In the following embodiments of the invention are explained with regard to the corrosives S and Cl and the exposure component elementary Cu. The invention may be realized with regard to other corrosives and exposure components containing other chemical elements or chemical compounds as well.

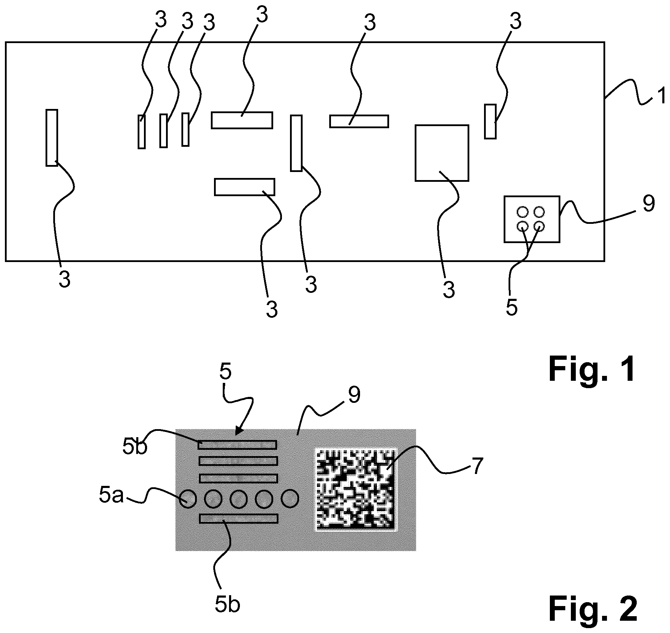

Fig. 1 depicts the inventive printed circuit board (PCB) comprising a sensor unit 1 containing different electronic components 3 at its surface. The conductive copper traces are not shown. The electronic module 1 further comprises an electrically isolating substrate 2 (for example a resin impregnated B-stage cloth, pre-prec) at which surface the copper traces and the electronic components 3 are accommodated. In the right corner of the electronic module 1 a sensor unit 10 with an exposure component 5 is provided. One example of such an exposure component 5 consists of nine layer like elements whose surface is formed either as a circle 5a accommodated in a horizontal row or as a bar 5b accommodated in a vertical row as shown in Fig. 2. Beside the exposure component 5 a representation of an individual number of the electronic module 1 is provided as a 2D barcode 7.
The area 9 of the exposed component 5 is not covered with solder mask (solder resist), a thin lacquer-like film of polymer that is applied to the copper traces of the PCB 1 to the remaining area of the electronic module 1 for protection against oxidation and to prevent solder bridges from forming between closely spaced solder pads. Further, the electronic components 3 and the solder pads (not shown in Fig. 1) are not covered with the solder mask.

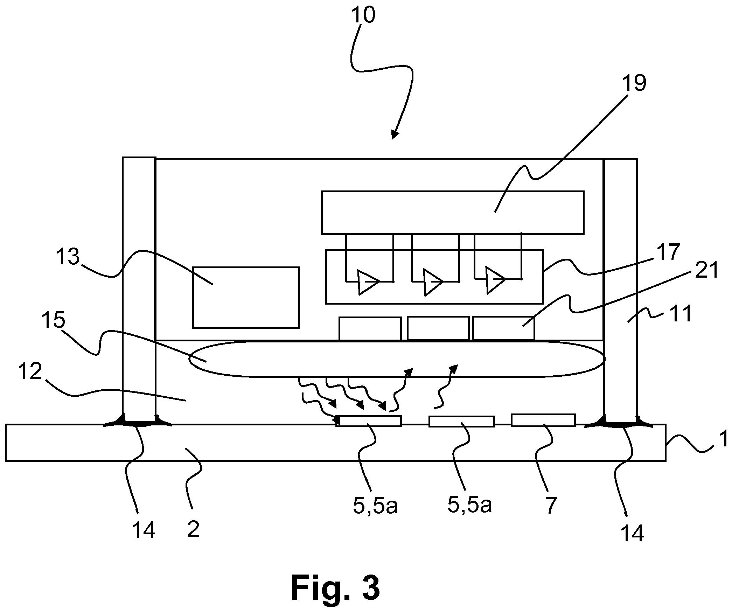

As shown in Fig. 3 the sensor unit 10 further comprises a housing 11 which has an opening 12 close to the exposed component 5 and a light source 13, containing for example at least one LED. The light source 13 provides light in the visible wavelength range which passes an optical component 15, for example containing lenses, and illuminates the surface of the exposed component 5 and the 2D barcode 7. The visible light reflected from the exposed component 5 and from the 2D barcode 7 passes the optical component 15 and is received by a receiving element 17, for example a spectrophotometer or a camera (e.g. a CCD camera). The receiving element 17 converts the light signals from the exposed component 5 and the 2D barcode 7 into electrical signals. The housing 11 is fixed at the surface of the substrate 2 using an SMT solder joint 14.
The receiving element 17 is connected to the processing integrated circuit (IC) 19 which as processing means to process the electrical signals transmitted from the receiving element 17 as explained in detail below.

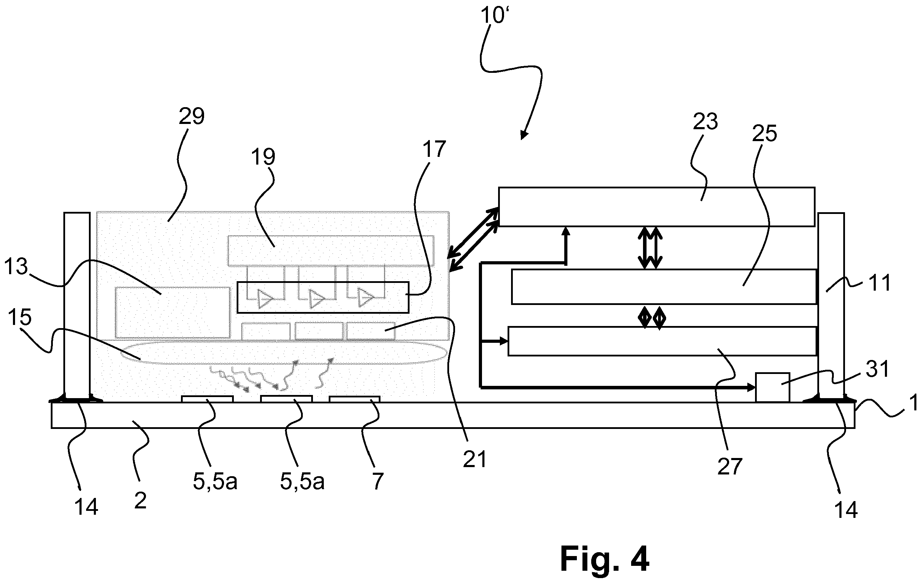

In the embodiment of the inventive printed circuit board (PCB) comprising a sensor unit as shown in Fig. 3 the light reflected from the exposed component 5 passes three filters 21 accommodated side by side, for example a red filter, a blue filter and a green filter. Accordingly, the receiving element 17, for example provided as a CCD camera receives the filtered reflected light at three corresponding different areas in the camera.
In the embodiment as shown in Fig. 4 the sensor unit 10' additionally comprises a ASIC control unit 23 as another processing means, a power supply unit 25, for example a battery, and a transmitter 27, for example a radio frequency transmitter, e.g. a Bluetooth transmitter according to the IEEE standard. The ASIC control unit 23, the power supply unit 25 and the transmitter 27 are connected to each other and to the imaging unit 29 containing the light source 13, the optical component 15, the filter 21, the receiving element 17 and the processing IC 19. The mentioned components and elements are capable of transmit electric signals and electric energy via the connection.

The data processed in the imaging unit 29 and the ASIC control unit are transmitted to a remote station using the transmitter 27.

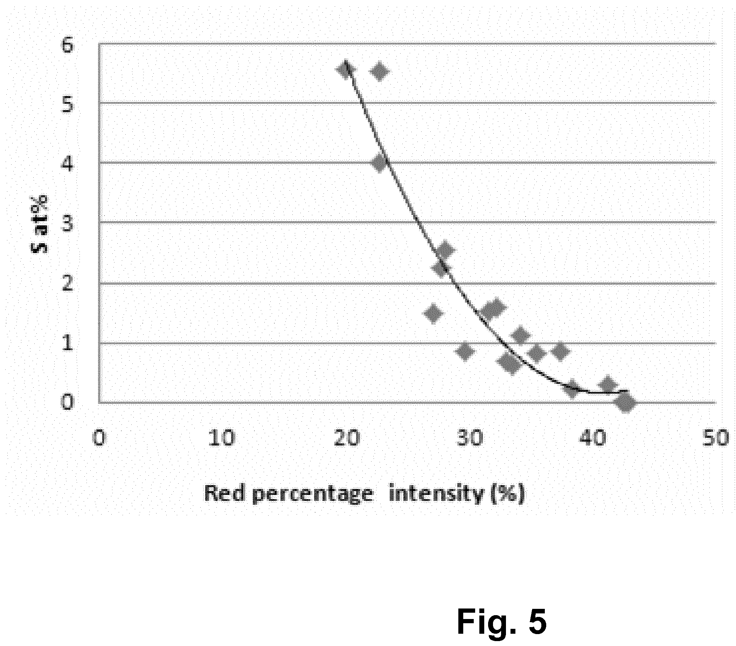

The electrical signals representing the color of the reflected visible light of the exposed component and the content of the 2D barcode provided by the receiving element 17 are processed in the processing IC 19 and, if applicable, additionally in the ASIC control unit 23. Therein, the color information is extracted from the signals and, for example, the color intensity of red, green and blue visible light, in particular the respective percentage intensity (please explain this value) is determined. Using a respective calibration which is shown for example by means of the diagrams of Fig. 5 to 8 the S concentration, Cl concentration or S + Cl concentration in atomic percent within the ambient air and the respective corrosive exposure level of S, Cl or S+Cl corrosive is determined. Additionally, from the picture of the 2D Barcode the individual number of the electronic module 1 is determined by the processing means 19, 23.

In a further embodiment the sensor unit 10' may further comprise a temperature sensor 31 measuring the ambient temperature. The information about the ambient temperature which is provided to the ASIC control unit 23 as well is further used to determine the correct corrosive exposure level of S, Cl or S+Cl.

If the corrosive exposure level determined by the sensor unit 10, 10' passes a certain predefined maximum value an alarm (e.g. an audible alarm or a visible alarm) may be activated.

For calibration of the sensor unit 10, 10' experiments have to be conducted to determine the correlation between the color of the visible light reflected by the exposed component and the corrosive exposure level or the corrosive concentration in the ambient air. Therefore, in a vacuum jar a copper exposed component, a S and/or Cl source and 1 drop of DI water is provided. Then, the air is pumped out of the vacuum jar. Afterwards the vacuum jar is placed in an oven or air to air temperature cycles chambers for various temperature and time duration exposure. Then, an optical image of the copper exposed component is obtained and an analysis of the RGB intensity is conducted. At the same time SEM/EDXS element analysis is performed to obtain the S and Cl concentration within the jar. The following table 1 shows the copper exposure component SEM/EDXS and optical RGB color intensity test results.

**Table 1**

| | **S concentation (at%)** | **Cl concentation (at%)** | **S+Cl concentation (at%)** | **Red Average (0-255)** | **Green average (0-255)** | **Blue average (0-255)** | **Red percentage (%)** | **Green percentage (%)** | **Blue percentage (%)** | **1-Red percentage%** |
|---|---|---|---|---|---|---|---|---|---|---|
| **A5-1c** | 0.0 | 0.0 | 0.0 | 157.2 | 109.4 | 100.0 | 42.9 | 29.9 | 27.3 | 57.1 |
| **B48-1c** | 0.0 | 0.0 | 0.0 | 152.0 | 101.4 | 104.1 | 42.5 | 28.4 | 29.1 | 57.5 |
| **B240-1c** | 0.0 | 0.1 | 0.1 | 148.8 | 98.7 | 102.6 | 42.5 | 28.2 | 29.3 | 57.5 |
| **A1-12C -trace** | 0.2 | 0.0 | 0.3 | 122.5 | 85.9 | 111.7 | 38.3 | 26.8 | 34.9 | 61.7 |
| **A1-12C -circle** | 0.3 | 0.1 | 0.3 | 127.1 | 82.5 | 98.5 | 41.3 | 26.8 | 32.0 | 58.7 |
| **A1-11C -circle** | 0.6 | 0.2 | 0.9 | 116.7 | 95.7 | 135.8 | 33.5 | 27.5 | 39.0 | 66.5 |
| **A1-11C -trace** | 0.7 | 0.2 | 0.9 | 118.8 | 98.2 | 142.4 | 33.1 | 27.3 | 39.6 | 66.9 |
| **A2-12C -trace** | 0.8 | 0.1 | 0.9 | 125.8 | 94.7 | 133.8 | 35.5 | 26.7 | 37.8 | 64.5 |
| **A2-7c** | 0.8 | 0.0 | 0.9 | 119.9 | 119.4 | 166.0 | 29.6 | 29.5 | 41.0 | 70.4 |
| **A2-12C -circle** | 0.9 | 0.1 | 1.0 | 129.7 | 96.0 | 120.9 | 37.4 | 27.7 | 34.9 | 62.6 |
| **A2-10c** | 1.1 | 0.1 | 1.2 | 127.0 | 102.0 | 142.0 | 34.2 | 27.6 | 38.2 | 65.8 |
| **A2-4c** | 1.5 | 1.9 | 3.4 | 77.8 | 75.1 | 134.0 | 27.1 | 26.2 | 46.7 | 72.9 |
| **A2-11C -trace** | 1.5 | 0.2 | 1.7 | 83.3 | 68.5 | 111.5 | 31.6 | 26.0 | 42.4 | 68.4 |
| **A2-11C -circle** | 1.6 | 0.2 | 1.8 | 97.9 | 80.7 | 125.5 | 32.2 | 26.5 | 41.3 | 67.8 |
| **A5-10c** | 2.3 | 0.3 | 2.6 | 104.3 | 103.8 | 167.1 | 27.8 | 27.7 | 44.5 | 72.2 |
| **A2-9c** | 2.5 | 0.3 | 2.8 | 105.2 | 98.8 | 172.4 | 28.0 | 26.3 | 45.8 | 72.0 |
| **B48-7c** | 4.0 | 0.0 | 4.0 | 42.0 | 41.5 | 100.3 | 22.8 | 22.6 | 54.6 | 77.2 |
| **B120-7c** | 5.5 | 0.1 | 5.7 | 26.6 | 28.2 | 62.5 | 22.7 | 24.0 | 53.3 | 77.3 |
| **A5-9c** | 5.6 | 0.3 | 5.8 | 20.3 | 20.6 | 60.6 | 20.0 | 20.3 | 59.7 | 80.0 |

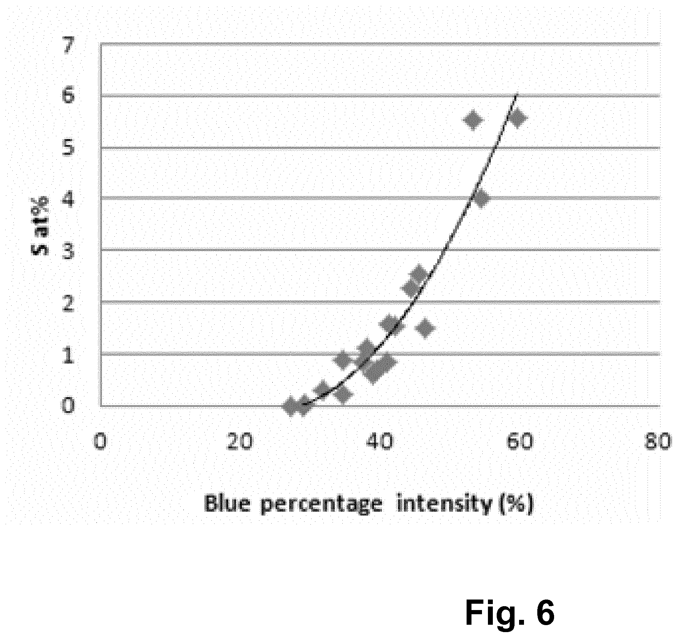

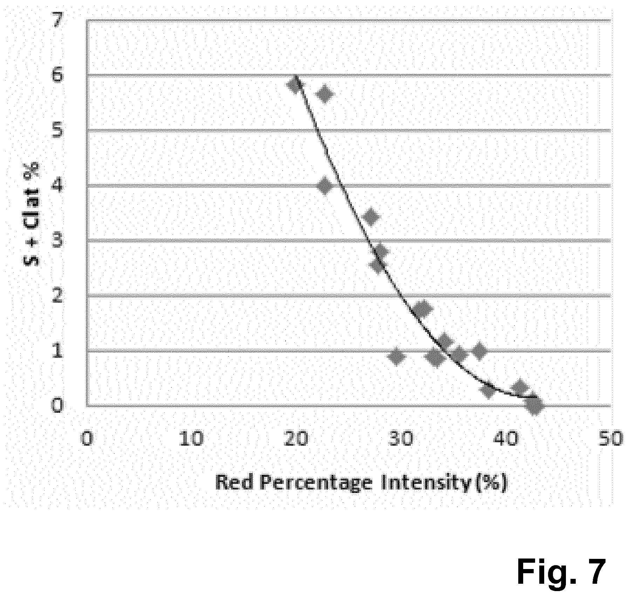

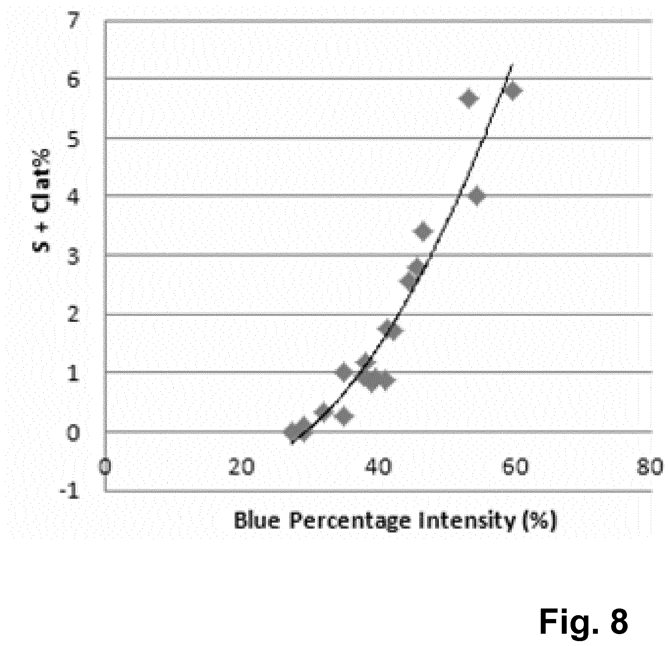

As depicted in the diagrams of Fig. 5 to 8 a good correlation between the ration of the red and blue color of the reflected light and the S concentration or the S+Cl concentration determined by SEM/EDXS analysis is observed. Fig. 5 and 7 show that red color percentage intensity decreases as S and Cl level increases. Further, according to the diagrams in Fig. 6 and 8, the blue color percentage intensity increases as S and Cl level increases.

The correlation can be determined as a quadratic equation (see fitted curve in Fig. 5 to 8), in particular
- for Fig. 5: y = 0.0126x²-1.035x+21.341, wherein x is the red percentage intensity (in %) and y the S concentration (in at%),
- for Fig. 6: y = 0.0047x²-0.2242x+2.5257, wherein x is the blue percentage intensity (in %) and y the S concentration (in at%),
- for Fig. 7: y = 0.0112x²-0.9597x+20.713, wherein x is the red percentage intensity (in %) and y the S+Cl concentration (in at%) and
- for Fig. 8: y = 0.0036x²-0.1147x+0.2473, wherein x is the blue percentage intensity (in %) and y the S+Cl concentration (in at%).
The inventive solution uses the simple concept of color change of an exposure component surface in order to detect corrosive presence and thereby to determine the level of corrosive exposure as a measure of the probability of failure of a high reliability board or product containing such board. This solution can be implemented easily and cost effectively. Further it is possible to determine the level of corrosive exposure for each individual board or product separately. The sensor unit may be implemented with instrumentation during manufacturing of the electronic module 1 or as an integrated component which stays with the electronic assembly and which can issue alarms allowing preventative maintenance in the case of high reliability, maintainable systems. The inventive printed circuit board (PCB) comprising a sensor unit is able to constantly monitor the corrosive exposure level and even transmit these data to a remote station including the individual number of the electronic module.

### List of reference numbers

- 1: electronic module
- 2: substrate
- 3: electronic component
- 5: exposure component
- 5a, 5b: element of exposure component 5
- 7: 2D barcode
- 9: area with no solder mask
- 10, 10': sensor unit
- 11: housing
- 12: opening of housing
- 13: light source
- 14: SMT solder joint
- 15: optical component
- 17: light receiving element
- 19: processing IC
- 21: filter
- 23: ASIC control unit
- 25: power supply unit
- 27: transmitter
- 29: imaging unit
- 31: temperature sensor

## Claims

1. A printed circuit board (PCB) (1) comprising a sensor unit (10, 10'), wherein the sensor unit (10, 10') comprises at least one exposed component (5, 5a, 5b) containing a chemical element and/or a chemical compound at its surface which is adapted to undergo a color change observed in visible light due to presence of a corrosive, wherein the sensor unit further comprises a light receiving element (17), operable to receive the visible light reflected by the exposed component (5, 5a, 5b) and to convert the received reflected light signals into electrical signals.

2. The printed circuit board (PCB) according to claim 1, wherein the exposed component contains elementary copper.

3. The printed circuit board (PCB) according to claim 1 or 2, wherein the sensor unit (10, 10') comprises processing means (19) operable to determine the color of the visible light reflected by the exposed component (5, 5a, 5b).

4. The printed circuit board (PCB) according to any of the previous claims, wherein the sensor unit (10, 10') further comprises a light source (13) directed to the exposed component (5, 5a, 5b).

5. The printed circuit board (PCB) according to any of the previous claims, wherein the sensor unit (10, 10') is operable to calculate the level of corrosive exposure.

6. The printed circuit board (PCB) according to any of the previous claims, wherein the sensor unit (10, 10') further comprises at least one optical element (13, 21), for example a color filter (21).

7. The printed circuit board (PCB) according to any of the previous claims, wherein the sensor unit (10, 10') is operable to receive the reflected light and/or to determine the color of the reflected visible light and/or to calculate the level of corrosive exposure continuously or intermittently.

8. The printed circuit board (PCB) according to any of the previous claims, wherein the sensor unit (10, 10') further comprising a representation (7) of an individual number of the printed circuit board, wherein the light receiving element is operable to receive reflected visible light from the representation of the individual number.

9. The printed circuit board (PCB) according to any of the previous claims, wherein the sensor unit (10, 10') further comprises a transmitter (27) operable to transmit data from the sensor unit (10, 10') to a remote station, wherein the transmitted data contain data concerning the measured reflected visible light from the exposed component (5, 5a, 5b) and/or from the representation (7) of the individual number and/or data concerning the determined color of the reflected light and/or data concerning the calculated level of corrosive exposure.

10. The printed circuit board (PCB) according to any of the previous claims, wherein the sensor unit (10, 10') further comprisies a temperature sensor (31).

11. The printed circuit board (PCB) according to any of the previous claims, wherein the exposed component (5, 5a, 5b) is surrounded by an area (9) containing no solder mask.

12. The printed circuit board (PCB) according to any of the previous claims, wherein the sensor unit (10, 10') comprises a housing (11) with an opening (12).

13. The printed circuit board (PCB) according to any of the previous claims, wherein the sensor unit (10, 10') is attached at the surface of a substrate (2) of the printed circuit board (1).

14. Procedure to calculate the level of corrosive exposure of an printed circuit board (1) comprising a sensor unit (10, 10') according to any of the claims 1 to 13, wherein the reflected visible light of the exposed component (5, 5a, 5b) is received, then the color of the received reflected visible light is determined and afterwards a level of corrosive exposure is calculated from the determined color.

15. Procedure according to claim 14, wherein the calculation of the level of corrosive exposure is further based on the ambient temperature determined by the temperature sensor (31).

## Patentansprüche

1. Gedruckte Schaltung (PCB) (1), eine Sensoreinheit (10, 10') umfassend, wobei die Sensoreinheit (10, 10') mindestens eine exponierte Komponente (5, 5a, 5b) umfasst, die an ihrer Oberfläche ein chemisches Element und/oder eine chemische Verbindung enthält, das bzw. die dafür ausgelegt ist, aufgrund des Vorhandenseins einer korrosiven Substanz eine Farbänderung durchzumachen, die in sichtbarem Licht sichtbar ist, wobei die Sensoreinheit ferner ein lichtempfangendes Element (17) umfasst, das dazu dient, das sichtbare Licht zu empfangen, das von der exponierten Komponente (5, 5a, 5b) reflektiert wird, und die empfangenen reflektierten Lichtsignale in elektrische Signale umzuwandeln.

2. Gedruckte Schaltung (PCB) nach Anspruch 1, wobei die exponierte Komponente elementares Kupfer enthält.

3. Gedruckte Schaltung (PCB) nach Anspruch 1 oder 2, wobei die Sensoreinheit (10, 10') eine Verarbeitungseinrichtung (19) umfasst, die dazu dient, die Farbe des von der exponierten Komponente (5, 5a, 5b) reflektierten sichtbaren Lichts zu bestimmen.

4. Gedruckte Schaltung (PCB) nach einem der vorangehenden Ansprüche, wobei die Sensoreinheit (10, 10') ferner eine Lichtquelle (13) umfasst, die auf die exponierte Komponente (5, 5a, 5b) gerichtet ist.

5. Gedruckte Schaltung (PCB) nach einem der vorangehenden Ansprüche, wobei die Sensoreinheit (10, 10') dazu dient, den Grad der korrosiven Exposition zu berechnen.

6. Gedruckte Schaltung (PCB) nach einem der vorangehenden Ansprüche, wobei die Sensoreinheit (10, 10') ferner mindestens ein optisches Element (13, 21), beispielsweise ein Farbfilter (21) umfasst.

7. Gedruckte Schaltung (PCB) nach einem der vorangehenden Ansprüche, wobei die Sensoreinheit (10, 10') dazu dient, kontinuierlich oder intermittierend das reflektierte Licht zu empfangen und/oder die Farbe des reflektierten sichtbaren Lichts zu bestimmen und/oder den Grad der korrosiven Exposition zu berechnen.

8. Gedruckte Schaltung (PCB) nach einem der vorangehenden Ansprüche, wobei die Sensoreinheit (10, 10') ferner eine Darstellung (7) einer individuellen Nummer der gedruckten Schaltung umfasst, wobei das lichtempfangende Element dazu dient, reflektiertes sichtbares Licht von der Darstellung der individuellen Nummer zu empfangen.

9. Gedruckte Schaltung (PCB) nach einem der vorangehenden Ansprüche, wobei die Sensoreinheit (10, 10') ferner einen Sender (27) umfasst, der dazu dient, Daten von der Sensoreinheit (10, 10') an eine ortsferne Station zu senden, wobei die gesendeten Daten Daten, die das gemessene reflektierte sichtbare Licht von der exponierten Komponente (5, 5a, 5b) und/oder von der Darstellung (7) der individuellen Nummer betreffen, und/oder Daten, welche die bestimmte Farbe des reflektierten Lichts betreffen, und/oder Daten, die den berechneten Grad der korrosiven Exposition betreffen, enthalten.

10. Gedruckte Schaltung (PCB) nach einem der vorangehenden Ansprüche, wobei die Sensoreinheit (10, 10') ferner einen Temperatursensor (31) umfasst.

11. Gedruckte Schaltung (PCB) nach einem der vorangehenden Ansprüche, wobei die exponierte Komponente (5, 5a, 5b) von einem Bereich (9) umgeben ist, der keine Lötmaske enthält.

12. Gedruckte Schaltung (PCB) nach einem der vorangehenden Ansprüche, wobei die Sensoreinheit (10, 10') ein Gehäuse (11) mit einer Öffnung (12) umfasst.

13. Gedruckte Schaltung (PCB) nach einem der vorangehenden Ansprüche, wobei die Sensoreinheit (10, 10') an der Oberfläche eines Substrats (2) der gedruckten Schaltung (1) befestigt ist.

14. Verfahren zum Berechnen des Grades einer korrosiven Exposition einer gedruckten Schaltung (1), die eine Sensoreinheit (10, 10') nach einem der Ansprüche 1 bis 13 umfasst, wobei das reflektierte sichtbare Licht von der exponierten Komponente (5, 5a, 5b) empfangen wird, dann die Farbe des empfangenen reflektierten sichtbaren Lichts bestimmt wird und danach ein Grad der korrosiven Exposition aus der bestimmten Farbe berechnet wird.

15. Verfahren nach Anspruch 14, wobei die Berechnung des Grades der korrosiven Exposition ferner auf der Umgebungstemperatur basiert, die vom Temperatursensor (31) bestimmt wird.

## Revendications

1. Carte de circuit imprimé (PCB) (1) comprenant une unité de détection (10, 10') où l'unité de détection (10, 10') comprend au moins un composant exposé (5, 5a, 5b) contenant un élément chimique et/ou un composé chimique à sa surface, qui est adapté pour subir un changement de couleur observé dans la lumière visible à cause de la présence d'une matière corrosive, où l'unité de détection comprend en outre un élément (17) recevant de la lumière pouvant fonctionner pour recevoir de la lumière visible réfléchie par le composant exposé (5, 5a, 5b) et pour convertir les signaux de lumière réfléchie reçus en signaux électriques.

2. Carte de circuit imprimé (PCB) selon la revendication 1, dans laquelle le composant exposé contient du cuivre à l'état élémentaire.

3. Carte de circuit imprimé (PCB) selon la revendication 1 ou 2, dans laquelle l'unité de détection (10, 10') comprend des moyens de traitement (19) pouvant fonctionner pour déterminer la couleur de la lumière visible réfléchie par le composant exposé (5, 5a, 5b).

4. Carte de circuit imprimé (PCB) selon l'une quelconque des revendications précédentes, dans laquelle l'unité de détection (10, 10') comprend en outre une source de lumière (13) orientée vers le composant exposé (5, 5a, 5b).

5. Carte de circuit imprimé (PCB) selon l'une quelconque des revendications précédentes, dans laquelle l'unité de détection (10, 10') peut fonctionner pour calculer le taux d'exposition corrosive.

6. Carte de circuit imprimé (PCB) selon l'une quelconque des revendications précédentes, dans laquelle l'unité de détection (10, 10') comprend en outre au moins un élément optique (13, 21), par exemple, un filtre de couleur (21).

7. Carte de circuit imprimé (PCB) selon l'une quelconque des revendications précédentes, dans laquelle l'unité de détection (10, 10') peut fonctionner pour recevoir la lumière réfléchie et/ou pour déterminer la couleur de la lumière visible réfléchie et/ou pour calculer le taux de l'exposition corrosive de manière continue ou intermittente.

8. Carte de circuit imprimé (PCB) selon l'une quelconque des revendications précédentes, dans laquelle l'unité de détection (10, 10') comprend en outre une représentation (7) d'un nombre individuel de la carte de circuit imprimé, où l'élément recevant la lumière peut fonctionner pour recevoir de la lumière visible réfléchie à partir de la représentation du nombre individuel.

9. Carte de circuit imprimé (PCB) selon l'une quelconque des revendications précédentes, dans laquelle l'unité de détection (10, 10') comprend en outre un transmetteur (27) pouvant fonctionner pour transmettre des données à partir de l'unité de détection (10, 10') à une station à distance, où les données transmises contiennent des données concernant la lumière visible réfléchie mesurée à partir du composant exposé (5, 5a, 5b) et/ou à partir de la représentation (7) du nombre individuel, et/ou de données concernant la couleur déterminée de la lumière réfléchie et/ou de données concernant le taux calculé d'exposition corrosive.

10. Carte de circuit imprimé (PCB) selon l'une quelconque des revendications précédentes, dans laquelle l'unité de détection (10, 10') comprend en outre un capteur de température (31).

11. Carte de circuit imprimé (PCB) selon l'une quelconque des revendications précédentes, dans laquelle le composant exposé (5, 5a, 5b) est entouré par une zone (9) ne contenant pas de masque de soudure.

12. Carte de circuit imprimé (PCB) selon l'une quelconque des revendications précédentes, dans laquelle l'unité de détection (10, 10') comprend un boîtier (11) doté d'une ouverture (12).

13. Carte de circuit imprimé (PCB) selon l'une quelconque des revendications précédentes, dans laquelle l'unité de détection (10, 10') est fixée à la surface d'un substrat (2) de la carte de circuit imprimée (1).

14. Procédure pour calculer le taux d'exposition corrosive d'une carte de circuit imprimé (1) comprenant une unité de détection (10, 10') selon l'une quelconque des revendications 1 à 13, où la lumière visible réfléchie du composant exposé (5, 5a, 5b) est reçue, ensuite la couleur de la lumière visible réfléchie reçue est déterminée et plus tard un taux d'exposition corrosive est calculé à partir de la couleur déterminée.

15. Procédure selon la revendication 14, dans laquelle le calcul du taux d'exposition corrosive est en outre basé sur la température ambiante déterminée par le capteur de température (31).
